# EUROPEAN PATENT SPECIFICATION

(11) **EP 2 705 196 B1**
(45) Date of publication and mention of the grant of the patent: **22.02.2017**
(21) Application number: 12724367.3
(22) Date of filing: 27.04.2012
(51) Int. Cl.: E03B 1/04

(54) **GREYWATER SYSTEM WITH SEVERAL RESERVOIRS IN PARALLEL**
GRAUWASSERSYSTEM MIT MEHREREN PARALLELEN RESERVOIRS
SYSTÈME DE RECIRCULATION D'EAU

(30) Priority: 03.05.2011 GB 201107310; 08.02.2012 GB 201202163
(43) Date of publication of application: 12.03.2014
(73) Proprietor: Electronicon Ltd, Canal Street Wigston Leicestershire LE18 4PN (GB)
(72) Inventor: Nigel Charles Savage, Hinkley, Leicestershire LE10 1UN (GB)
(74) Representative: Serjeants LLP
(86) International application number: PCT/GB2012/050933
(87) International publication number: WO 2012/150446

(56) References cited:
- WO-A1-2010/120202
- CN-U- 201 762 770
- DE-A1- 19 602 098
- GB-A- 2 482 575
- US-A1- 2011 036 410

## Description

### FIELD OF THE INVENTION

The present invention relates to a water recirculation system, and in particular to a water recirculation system that may be employed in a washing unit such as a shower or a bath in order to recycle and save water.

### BACKGROUND TO THE INVENTION

One of the biggest problems facing the population today, and increasingly more so over the next few decades, is the dwindling resource of water on this planet. Human beings simply cannot function without a water supply. We need a constant supply to consume just to stay alive, remain hydrated and regulate our bodies' temperature. In addition, everyday water is used in a variety of scenarios from simple domestic cleaning and washing purposes, to larger scale industry, cooling, cleaning, crop watering and leisure applications. Sooner rather than later the finite supply in aquifers will run out and the supply of fresh water circulating on Earth will cease to meet our needs, with some experts predicting that natural water stocks will run out quicker than those of supposedly more valuable fossil fuels such as oil and natural gas. Efforts are being made to reduce consumption of water. For example, the European Commission has set a target that the average domestic usage of water in the European Union should be reduced from 140 litres to 120 litres per person per day by 2020.

One of the biggest drains on our water supply in the developed world occurs when baths or showers are taken. Although it is widely acknowledged that a shower uses less water than a bath to clean oneself, this is only true when the shower is run for a short period of time or when the shower head is unable to deliver large volumes or high flow rates of water. Such high flow rate showers are typically referred to as 'power showers'. Although providing a pleasurable and relaxing experience for many people, as well as affording the opportunity to wash away dirt and grime from our bodies, any type of shower (eco-shower, regular shower or power shower) that is allowed to run for a considerable period of time will produce large volumes of waste water. An average shower lasting no longer than five or six minutes will produce 50 litres of waste water. In reality, many showers last much longer or use higher flow rates so will waste larger quantities of water. Any efforts therefore to reduce water consumption from baths or showers, or to put the waste water to better use than to allow it to simply drain away, must be considered beneficial.

GB2482575 discloses a water recirculation system for a shower unit comprising a plurality of reservoirs and switching means for selecting from which of the plurality of reservoirs the shower unit receives water. A pump recirculates water from the shower unit to the active reservoir, and a system of valves is configured so that the shower unit becomes supplied with fresh water circulated from a second reservoir, while simultaneously emptying the first reservoir and refilling/reheating it for further use if required.

US2011/036410A1 describes a charging conduit which extends from a source of grey water such as a washing machine to separate inlets of two tanks arranged in parallel. A discharging conduit extends from a separate outlet of each tank via a pump to the source of grey water for recycling the grey water. Upper and lower level-detectors are provided for each tank and a flow detector monitors the flow of grey water through the discharging conduit. Valves control the flow of grey water into and out of each tank and respond to the level of grey water in the tanks monitored by the level-detectors.

WO2010/120202A1 describes a method to collect, store and reuse bath and shower grey water in a variety of household applications. The system uses the flow of mains water to a shower to drive a pump to transport grey water from a lower gravitational potential energy tank to a higher gravitational potential energy tank. However, grey water is not supplied to the shower and is not re-circulated to be used again for washing.

CN201762770U describes a reclaimed water production and utilization apparatus, having a means to collect domestic wastewater from appliances in homes and hotels, and to use the reclaimed water for flushing toilets or watering gardens and suchlike.

DE19602098A1 describes one or more accumulation points for used water which are arranged beneath the level of a cistern. Within the installation, one or more hydraulic pumps are connected to a domestic water supply mains and are driven by the water supply pressure. The whole installation functions without the use of electrical energy. One or more of the cisterns is provided with a hydraulic pump. The work input of the pump is connected to the domestic water mains, and the work output of the pump is connected to the cistern fresh water input.

It would therefore be advantageous to have a system which is able to continuously re-circulate or recycle water from a shower system so that only a small quantity of water is used during the whole washing process. In addition, it would be desirable to change the source of the water flow within the circulating system so that fresh water can be introduced at a user's command, while at the same time evacuating the used waste water from the shower system. It would be especially desirable to be able to maintain the operating temperature and flow rate of the water within the shower system while it is being re-circulated, so that a user is not affected by irregularities in the temperature or pressure of the water with which they are washing.

### SUMMARY OF THE INVENTION

The invention provides a water recirculation system comprising a plurality of reservoirs supplied from a water source; a washing unit to receive water from the reservoirs; and switching means for selecting from which of the reservoirs the washing unit receives water, wherein the system comprises a pump connected to return water from the washing unit to the reservoirs; characterised in that a supplementary tank is located between the washing unit and the pump, the system having means to distribute water from a first reservoir of the plurality of reservoirs to the supplementary tank.

The water recirculation system is preferably configured so that users may make use of the washing unit to clean themselves with water that has been stored in one of the reservoirs. The reservoirs, which preferably contain heating elements, are supplied with water from a mains supply which optionally may pass through a non-return valve. The washing unit is preferably a shower unit and further comprises a waste trap incorporating a filter. The water recirculation system is preferably configured so that a user may utilise heated water that is circulated from one of the reservoirs in a continuous fashion in order to wash themselves, before switching to heated water that is circulated from a second reservoir. In this way, a limited quantity of water is circulated through the recirculation system allowing a user to save water during the process of taking a shower. The user may switch the source of the water, at their discretion, to permit a fresh supply of clean water to be introduced into the recirculation system from the second reservoir in order to rinse away, for example, excess cleaning products.

The waste water from the shower is collected and optionally passes through a flow switch before being returned to the active reservoir by the action of the pump. Preferably a multi-way junction is positioned downstream from the pump so that water may be routed to a selected one of the reservoirs at the command of the user. Each reservoir has separate inlet and outlet means to distribute water from a) the water source to the reservoirs, b) the pump to the reservoirs, c) the reservoirs to the washing unit and d) the reservoirs to a drain. The inlet and outlet means to distribute water around the recirculation system are preferably solenoid-operated valves to control the circulation of water, filling of the reservoirs and, as will be seen, the evacuation of waste water from the system. The control means are ultimately commanded by a user, according to their own specific needs.

It is preferable that at the same time as switching the source of the water circulating within the system from one reservoir to another, a simultaneous evacuation of the waste water occurs. When the water source is switched, the system purges the waste water from the reservoir no longer supplying the shower unit by displacing the waste water with clean water which is received preferably under pressure from a mains water supply. The waste water previously contained within the reservoir is discharged out of the recirculation system through a drainage port. The clean water entering the reservoir is then heated in readiness to be supplied to the shower unit as and when required. It is therefore preferable that a user is able to switch the water supply from a first reservoir to a second reservoir, and back to the first reservoir as often as they require. It is preferable that the system operates with only one heater in use at any one time in order to save energy usage.

The system comprises a supplementary tank located between the washing unit and the pump, which provides a supply of water for the pump to draw from when first operated. The supplementary tank may also preferably comprise a sensor to determine the volume of water in the tank. When the volume of water falls below a pre-determined limit, the sensor will cause the supplementary tank to be re-filled with water. The system also comprises a bypass pipe from one of the reservoirs to the supplementary tank, whereby water can be circulated through the system while bypassing the washing unit used. The system can be programmed to periodically circulate the water in this way prior to use of the washing unit so that the water within the system can be maintained to a sufficient temperature for washing. In this way, when a user commences a shower, there is no delay or lag in having to wait for water of a desirable temperature to warm up in the system. It is available on demand.

It is also highly preferable that the water recirculation system has a self-cleaning function, allowing the system to raise the temperature of the water in the reservoirs to a sufficiently high temperature in order to kill water borne pathogens. It is envisaged that a safety means will be introduced that does not permit users to implement the self-cleaning step of the system while they are using the shower, in order to avoid the risk of scalding themselves with hot water.

It would be highly preferable if the system comprises a cleaning apparatus for killing water borne pathogens, preferably in at least one or in both of the reservoir tanks. A silver electrode based cleaning apparatus has been proven to be highly effective at minimising or reducing water borne pathogens in a supply of water. When programmed to do so, a small quantity of silver ions is introduced into one or more of the reservoir tanks by application of a small current across the silver or silver-copper electrode.

The invention as described above solves the problem of providing a water recirculation system that may be used to continuously re-circulate or recycle a small quantity of water while a user takes a shower. In particular the water recirculation system permits the user to change the source of water that is flowing within the recirculation system so that a fresh supply of water may be introduced into the shower at a user's command. The system also permits the simultaneous evacuation from the shower system of waste water that has been generated. In addition, the water recirculation system does not limit a user's experience of taking a shower as the user is not affected by irregularities in the temperature or pressure of the flow of water when the water recirculation system is operating because the circulating water is isolated from the remainder of the household water system. Because of the small total amount of water in the system, the heaters are able to maintain a constant temperature of the water even when the waste water evacuation and replacement steps are performed. Most particularly the water recirculation system is capable of operating while recirculating only about 5 litres of water, allowing significant savings to water consumption and cost to be made. With a sufficiently powerful pump, flow rates well in excess of 10 litres per minute can be achieved, to compare favourably with the experience of existing 'power showers' but without that flow of water running to waste.

### DRAWINGS

Figure 1 shows a schematic representation of a water recirculation system not covered by the scope of the present invention;
Figure 2 shows a schematic representation of the water recirculation system according to a first embodiment of the invention operating in a preheat mode;
Figure 3 shows a schematic representation of the embodiment of Figure 2, while operating in a mode that permits normal use of the washing unit;
Figure 4 shows a schematic representation of the embodiment of Figure 2, while operating in a mode that flushes used water from the first reservoir tank;
Figure 5 shows a schematic representation of the embodiment of Figure 2, while operating in a mode that flushes used water from the second reservoir tank; and
Figure 6 shows a schematic representation of the water recirculation system according to a second embodiment of the invention, operating in a mode that flushes used water from the washing unit.

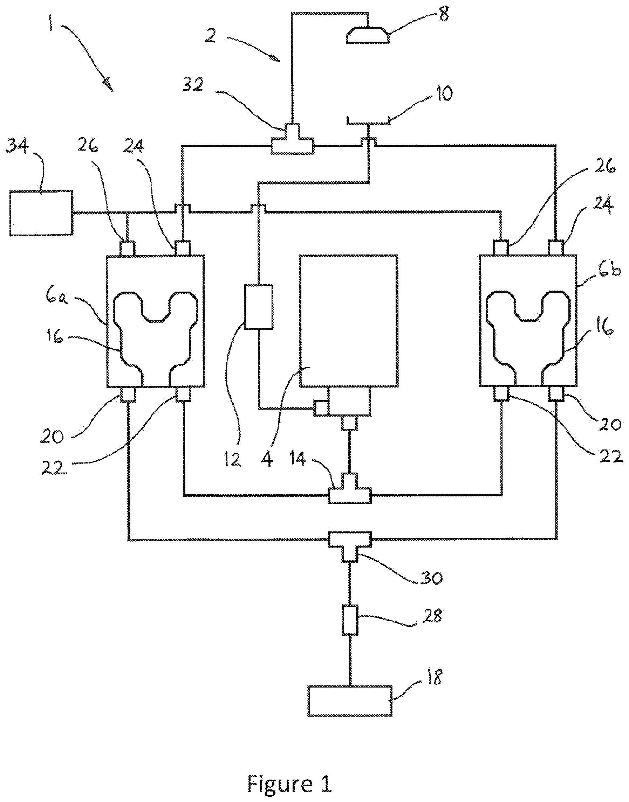

Figure 1 shows a schematic representation of a water recirculation system according to the prior art, as described in more detail below.

The system 1 comprises a shower unit 2 in connection with a pump 4 and two water reservoir tanks 6a,6b, which may conveniently be located beneath a shower tray (not shown) in the base of the shower unit 2. The shower unit 2 may be any standard shower unit with a shower head 8 as is familiar to a person skilled in the art. The tray of the shower unit 2 contains a waste trap 10 to collect the water from the shower head 8, which either falls directly into the waste trap 10 from the shower head 8 above or is water spray that runs from the sides of the shower unit 2 or from a user of the shower and accumulates in the waste trap 10. The waste trap 10 also incorporates a fine, *e.g.* 250µm, filter (not shown) to prevent waste elements from the used shower water, such as body hair or grains of dirt, from entering the recirculation system, where they could prevent the correct operation of the valves for example.

The pump 4 is connected to the waste trap, from which it pumps water, preferably via a flow switch 12. The pump 4 will typically have a power in the range 300W to 600W, depending on the flow rate that is desired and the resistance to flow that is presented by the recirculation system 1. The outlet of the pump 4 is connected to the inlet of a first three-way junction 14, which in turn has two outlets coupled respectively to the two reservoirs 6. The flow switch 12 prevents the pump from operating if there is an insufficient flow of water from the waste trap, which could cause the pump to run dry and be damaged. Insufficient flow is most likely to be the result of a blocked filter and the user may be given a message via the control panel to indicate that the filter should be cleaned.

The reservoir tanks 6 may be made from any suitable material such as steel, copper or plastic that will not degrade in the presence of hot water. Each of the tanks is configured to hold a quantity of water that will be re-circulated through the system when a user takes a shower. It is anticipated that each of the tanks will typically have a capacity of about 3 litres of water, in order for the water recirculation system to remain economical in terms of water and power usage, although it is anticipated that the reservoir tanks may hold any sufficient quantity of water to permit a user to take a shower, bearing in mind that some water will inevitably be lost from the system during use owing to wetting of the user and of the walls of the shower unit 2.The relatively small capacity of the reservoir tanks 6, in comparison with the amount of water that is typically used during a normal shower, will not affect the performance of the recirculation system 1. It is envisaged that the recirculation system 1 will be able to consistently deliver flow rates of between 11 and 22 litres of water per minute in use, which compares favourably with flow rates of normal showers which are only in the region of 6-9 litres per minute. Although illustrated as discrete components in the schematic Figure 1, the reservoir tanks 6a,6b may conveniently be located adjacent to one another, or may even be two sub-divisions of a single tank, which among other benefits reduces the surface area through which heat may be lost to the surroundings.

Each tank 6 also comprises a heating element 16 of a power sufficient to raise the temperature of the water in the tank rapidly to a desired temperature for taking a shower, for example 40°C. For example, a 3kW heater may raise 3 litres of water to 40°C in approximately 70 seconds. Once up to temperature, the rapid recirculation of a small quantity of water through the system results in a short time to return to the heater and only low power is then required to maintain the water at the desired temperature. The temperature may be selected by the user and maintained by switching the heater 16 on and off under the control of a thermostat in a conventional manner.

Each tank 6 is fitted with a pair of inlet valves 20,22 and a pair of outlet valves 24,26 in order to regulate the flow of water between the tank 6 and the other parts of the system 1. The inlet and outlet valves 20,22,24,26 are individually controlled by solenoids under the command of an electronic controller (not shown), and connect the various components of the recirculation system 1 as follows.

The tanks 6 are filled with water which is supplied from a mains water supply 18 through a non-return valve 28 to prevent back-flow of water from the system 1 into the mains. Water from the mains supply 18 enters a second three-way junction 30, which distributes it to the respective tanks 6a,6b. A first inlet valve 20 on each tank can be operated to permit or prevent the flow of water from the mains water supply 18 into the tank 6. A second inlet valve 22 on each tank 6 can be operated to permit or prevent the flow of water from the pump 4 to the tank 6. A first outlet valve 24 on each tank 6 can be operated to permit or prevent the flow of water from the tank to the washing unit 2 through a third three-way junction 32 that connects both tanks 6a,6b to the washing unit 2. A second outlet valve 26 on each tank 6 can be operated to permit or prevent the flow of water from the tank to a drain 34.

In use, water is supplied from the mains water supply 18 to the system 1 prior to a shower being taken for the first time in order to fill up at least a first one of the tanks 6a through its open first inlet valve 20. The first inlet valve 20 is then closed and the heater 16 heats the water in the first tank 6a to the required temperature as defined by a user on a control panel (not shown) and the user may commence their shower. The first outlet valve 24 and the second inlet valve 22 are then opened to create a circuit through the tank 6a, the shower unit 2 and the pump 4. The pump is operated to push water from the tank 6a to the shower head 8 and is available for the user to wash themselves. Water and associated residue from the showering process collects in the waste trap 10 which filters out any significant foreign objects from the system. It is anticipated that the waste trap 10 will be designed to allow the filter to be removed easily so that it may be cleaned and maintained on a regular basis. As previously described, the water is removed from the waste trap 10 by the action of the pump 4, which returns the water to the first tank 6a after passing through the flow switch 12.

The water that is returned to the first tank 6a is therefore continuously circulated within the system 1, being re-heated to raise it to the desired temperature each time it passes through the tank 6a. When a user decides that the recirculating water is no longer sufficiently clean for washing, *e.g.* because it has become contaminated with dirt or with soap, shampoo or any other cleaning product, the user will require a fresh quantity of water with which to rinse themselves.

While water from the first tank 6a has been circulating through the system 1, the second tank 6b has been filled from the mains supply 18 and has also been heated to the user's desired temperature. Preferably, in order reduce the maximum power consumption, only one of the heaters 16 is operated at any time, with the heater 16 in the active tank 6 taking priority. Nevertheless, after the water in the first tank 6a has reached its desired temperature the associated heater should need to be operated only intermittently in order to maintain that temperature, thereby allowing sufficient time for the heater in the second tank 6b to raise the temperature of the second volume of water to the same level.

The user switches the flow of water circulating within the system 1 from the first tank 6a to the water from the second tank 6b by selecting the appropriate function on the control panel (not shown). The second inlet valve 22 and the first outlet valve 24 of the first tank 6a are closed and the corresponding valves of the second tank 6b are opened to create a new circuit through the second tank 6b, the shower unit 2 and the pump 4. The pump is operated so that the clean water from the second tank 6b is introduced into the system and circulates in a manner analogous to that already described.

Simultaneously, or after a short delay, the second outlet valve 26 of the first tank 6a - which has remained closed throughout the procedure described up to now - is opened to allow the dirty water that was flowing within the recirculation system 1 via the first tank 6a to be sent to the drain 34 and evacuated from the system 1. The first tank 6a is then re-filled with fresh water from the mains supply 18 and it is heated to the same temperature as previously selected in readiness for the next changeover of water supply if the user requires it. Preferably, the flow of water under mains pressure into the first inlet 20 of the tank 6 is used to displace the dirty water from the tank 6.

A user may switch the flow of the water within the water recirculation system 1 as often as they require within the course of a single shower, although it is expected that in most cases the user will use the water supply from each tank 6 only once. In this way, significant savings can be made in terms of water usage, which are mirrored by associated savings in energy consumption of the water recirculation system.

The water recirculation system 1 has a self-cleaning function, in which, when the shower is not in use, the heaters 16 can be used to raise the temperature of the water in the reservoirs 6 to a temperature high enough to kill water-borne pathogens, for example 65°C. This function could be instigated by the user from the control panel or automatically at predetermined time intervals. A safety means will be provided that prevents the pumping of high temperature water from the reservoirs 6 to the shower unit 2 while the self-cleaning operation is progress, in order to avoid the risk of scalding.

The system as described and illustrated has two reservoirs 6a,6b and the user may switch the water supply alternately between them. It will readily be understood that a larger number of reservoirs 6 could be provided, with the respective inlet and outlet valves 22,24 being operated so as to cycle the water supply among each of them in turn.

The reservoirs need not be simple tanks but can be any suitable shape that enables a sufficient volume of water to be held in thermal communication with the heater element. In particular, each reservoir 6 may contain internal walls (not shown) that define a one-way path from the inlet valves 20,22 to the outlet valves 24,26. This arrangement would help to ensure that, when clean water from the mains supply 18 is used to displace dirty water from the tank 6 to the drain 34, there is minimal mixing between the clean and dirty water. On the other hand, it would reduce convection within the tank that might otherwise help to ensure a uniform water temperature. Taking this development a stage further, each reservoir could take the form of a coiled or convoluted pipe with the heater element running along its length.

Forms of heating other than electrical elements could be used in connection with the invention. For example, with a more complex plumbing arrangement, the water could be directed to pass through the heating unit of a combination boiler. It might be possible for all of the reservoirs to share a common heating unit.

As described, each of the inlets and outlets 20,22,24,26 of the tank 6 is regulated to be opened or closed by its own solenoid-controlled valve. By changing the configuration of open and closed valves, different circuits and flow paths through the system 1 can be selected. A different way of achieving the same end would be to remove the inlet and outlet valves 20,22,24,26 from the tanks 6 and to insert multi-way valves in place of the three-way junctions 14,30,32. The flow paths through the system 1 could then be reconfigured by changing the positions of the multi-way valves. For example the first three-way junction 14 could be replaced by a valve with three positions: one that blocks the flow of water from the mains supply 18, one that directs water from the mains supply 18 to the first tank 6a, and one that directs water from the mains supply 18 to the second tank 6b.

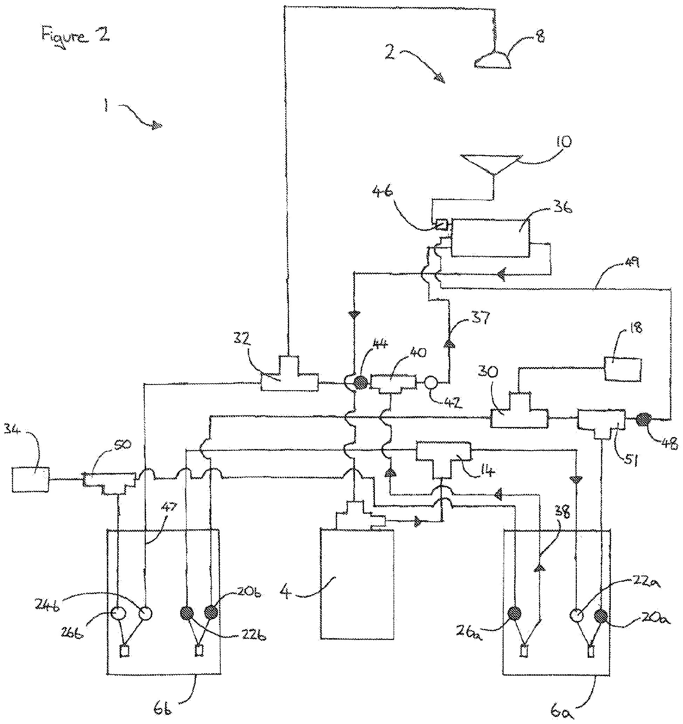

Referring now to the other drawings, Figures 2-5 show various modes of operation of a first embodiment of the invention as will now be discussed in more detail. The direction of water flowing in the water recirculation system 1 is shown on each of Figures 2-5 by a series of arrows. The flow of water is directed by selectively opening and closing valves, which are shown in the Figures as filled circles when closed and as empty circles when open. The valves are preferably solenoid controlled. Further non-return valves (not shown) may be placed in series with some or all of the solenoid-controlled valves where necessary to prevent leakage of water due to reverse pressure differences that can arise.

The water recirculation system 1 comprises a supplementary tank 36 which is connected to the waste trap 10 of the washing unit 2. Water from the waste trap 10 enters the supplementary tank 36 and exits from the underside of the supplementary tank 36 prior to being circulated around the system 1 by the pump 4. The supplementary tank 36 contains enough water so that it is able to supply and fill all of the pipes in the water recirculation system 1 so that when the pump 4 is first operated it does not run dry before the water has completed its circuit, *i.e.* before water that has been pumped to the washing unit 2 begins to return from the waste trap 10 to the inlet of the pump 4. The supplementary tank 36 is filled with water from the mains supply 18 prior to use of the washing unit 2.

The system comprises a bypass pipe 37 which permits water to circulate from the first reservoir 6a to the supplementary tank 36 without passing through the washing unit 2, when valve 44 is closed and valve 42 is open. When the preheat function of the water recirculation system 1 is started, valve 22b and 44 are closed and valves 22a and 42 are opened. Water from the supplementary tank 36 is supplied to the pump 4 and transmitted to the reservoir 6a after passing through the first three-way junction 14. Water exits the reservoir tank 6a through pipe 38 and passes through a fourth three-way junction 40, before passing through valve 42 and along the bypass pipe 37 to return to the supplementary tank 36. A non-return valve 46 between the waste trap 10 of the washing unit 2 and the supplementary tank 36 prevents the pressurized water flowing up from the supplementary tank 36 into the waste trap 10 of the washing unit 2.

A heater (not shown in Figure 2) in the reservoir 6a is operated during this cycle so that a flow of preheated water is circulated within the interconnecting pipes of the system so that water of a preset temperature may be transmitted to the washing unit 2 at the exact time that a user commences taking a shower. It is likely that if the supplementary tank 36 and the pipework are sufficiently well insulated, the pump 4 will need to be operated only intermittently to maintain the water in the system at an acceptable temperature.

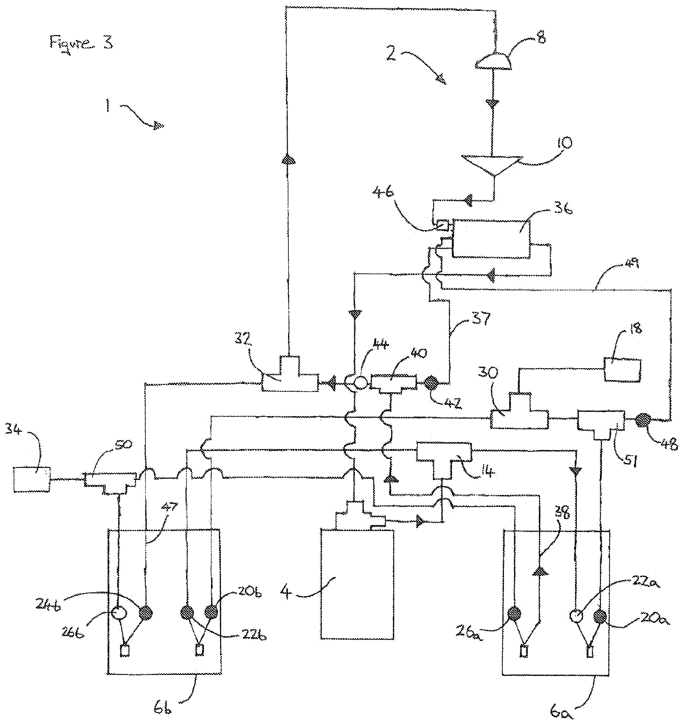

Figure 3 shows the typical flow of water in the water recirculation system 1 of Figure 2 when the washing unit 2 has been turned on and water is circulating through the system 1. The flow of water through the system 1 is the same as just described for Figure 2 up until the point where the water enters the fourth three-way junction 40. Instead of exiting the fourth three-way junction 40 through valve 42, the flow of water is directed through valve 44 and enters the third three-way junction 32, from where it is transmitted to the washing unit 2 (valve 24b being closed to prevent the water entering the second reservoir 6b). Water exiting the washing unit 2 through the waste trap 10 then drains into the supplementary tank 36.

When the user decides that the recirculating water has become too dirty or soapy, the user can opt to switch the source of water for the washing unit 2 from the first reservoir 6a to the second reservoir 6b, *e.g.* by pressing a button. Valve 22a is then closed and valve 22b is opened so that water pumped into the first three-way junction 14 is diverted into the second reservoir 6b. Hot water is thus displaced from the second reservoir 6b via the pipe 47 and the third three-way junction 32 to the washing unit 2. Meanwhile, by opening valve 20a and keeping valve 20b closed, fresh water from the mains supply 18 can be introduced into the first reservoir 6a via the second three-way junction 30 to displace the dirty water from reservoir 6a through valve 26a to the drain 34. Then, while water from the second reservoir 6b is being used to supply the washing unit 2, the fresh water in the first reservoir 6a can be heated ready for use when the user decides to switch reservoirs 6a,6b again.

Because some used water remains in the pipework and in the supplementary tank 36 at all times, switching the source of water for the washing unit 2 from one reservoir 6a,6b to the other reservoir 6b,6a will not immediately replace all of the used water in the system 1 with fresh water. The proportion of water replaced on each changeover will depend on the capacity of the reservoirs 6a,6b relative to the remainder of the system 1. For the maximum use of fresh water, it is possible to program a "rinse" mode of operating the system 1 that automatically and repeatedly switches between the reservoirs 6a,6b as soon as the next reservoir 6a,6b has been filled and raised to the desired temperature. Of course, operating in this mode will detract from the water- and energy-saving benefits that the system 1 is capable of providing.

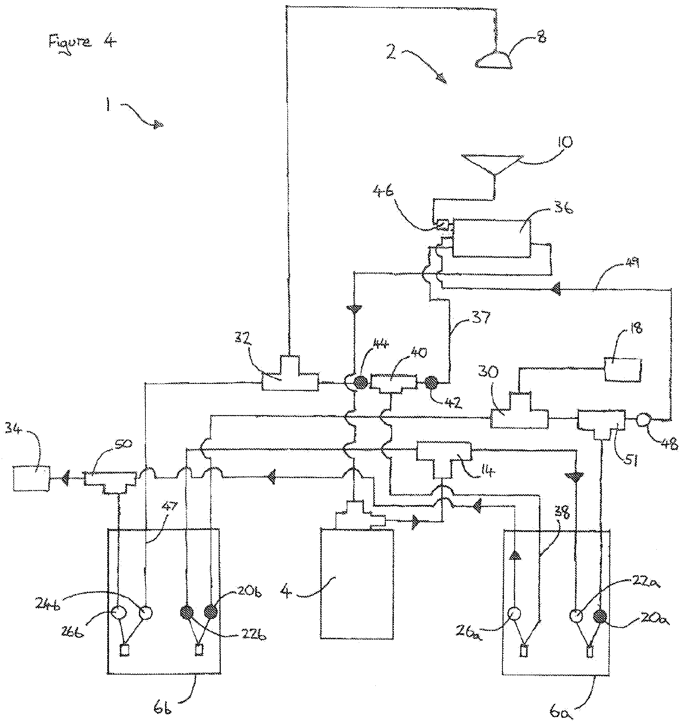

After usage of the system 1 has occurred, the various pipes and in particular the supplementary tank 36 and at least one of the reservoirs 6a,6b will be filled with used water. It may be desirable to flush the system with fresh water, *e*.*g*. before the washing unit 2 is used by a different person. Figure 4 shows a mode of operation of the embodiment of Figure 2 wherein water from the first reservoir tank 6a is expelled from the system 1 using mains water pressure. This mode of operation makes use of a flushing pipe 49 between the mains water supply 18 and the supplementary tank 36.

Fresh water enters the system 1 from the mains water supply 18 and, by closing valves 20a, 20b and opening valve 48, is routed through the second three-way junction 30 and a sixth three-way junction 51 before passing into the supplementary tank 36. The fresh water dilutes and displaces the used water from the supplementary tank 36, which passes through the non-operating pump 4 before being transferred to the first three-way junction 14. Valve 22a is open and valve 22b is closed so the flow of water is directed into the first reservoir tank 6a, and exits from the first reservoir tank 6a through valve 26a before passing through the fifth three-way junction 50 and exiting the system 1 at the drain 34.

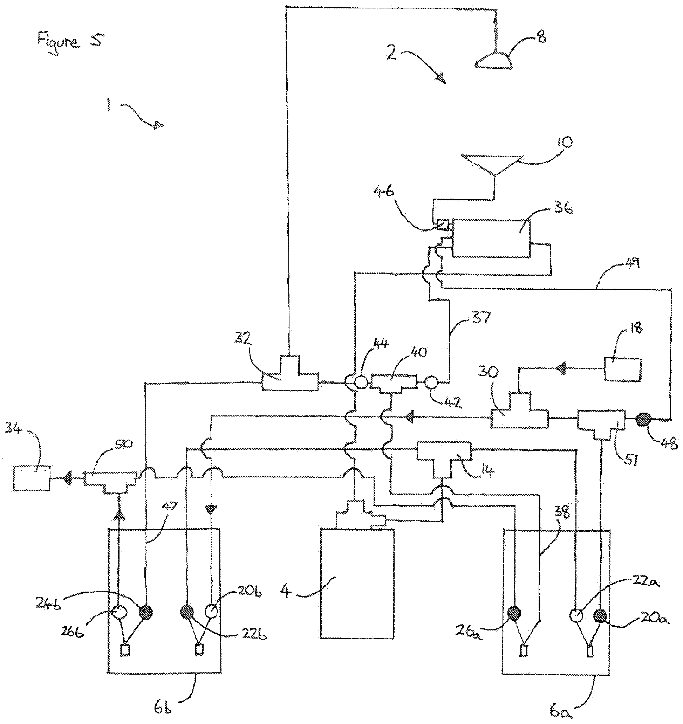

Figure 5 shows another mode of operation of the embodiment of Figure 2, wherein water from the second reservoir tank 6b is expelled from the system 1. Water enters the system 1 from the mains water supply 18 and, by closing valves 20a and 48 and opening valve 20b is routed through the second three-way junction 30 to enter the second reservoir 6b. Valves 24b and 26a are closed so that the water exits from the second reservoir 6b through valve 26b and is routed through the fifth three-way junction 50 before being transmitted out of the system 1 through the drain 34. The system 1 will typically be operated in the mode shown in Figure 5 as a second stage of flushing the system 1, sequentially before or after the mode shown in Figure 4. However, if during the previous use of the washing unit 2 it was the first reservoir 6a that was active, then as described above in connection with Figure 3 the second reservoir 6b will already have been flushed and refilled with clean water ready for a further request by the user to switch the water supply. Such a refilling operation uses exactly the same flow pattern as shown in Figure 5. In those circumstances a further flushing of the second reservoir 6b may be deemed unnecessary.

In a further mode of operation (not illustrated) for flushing the system of Figures 2 to 5, it is possible to set the various valves so that fresh water from the mains supply is directed to flow sequentially through the first reservoir 6a, the supplementary tank 36 and the second reservoir 6b to the drain, without passing through the flushing pipe 49. It will be understood that if this mode of flushing is to be adopted, the flushing pipe 49, the sixth three-way junction 51 and the valve 48 could therefore be omitted from the system.

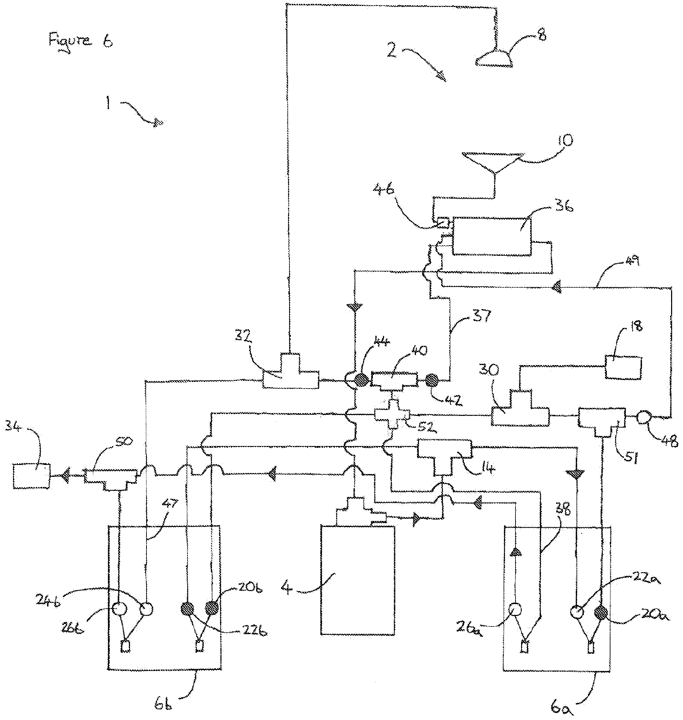

Figure 6 shows a second embodiment of a water circulation system 1 in accordance with the invention. It is identical to the system 1 in Figures 2 to 5, except that the pipe 38 from the first reservoir 6a to the fourth three-way junction 40 and the pipe from the second three-way junction 30 to the second reservoir 6b, instead of crossing over one another, intersect in a four-way junction 52. Water can thus flow into the four-way junction 52 either from the first reservoir 6a or from the mains supply 18 via the second three-way junction 30. By opening or closing valves 20b, 42 and 44, the water can be directed to flow out of the four-way junction 52 either to the second reservoir 6b or to the fourth three-way junction 40. This gives additional flexibility over how the water flow through the system can be configured. For example, fresh water can be controlled to flow directly from the mains supply 18 through the four-way junction 52 and the fourth and third three-way junctions 40,32 to the washing unit 2, in order to flush used water from the standing pipe of the washing unit 2.

Despite the fact that Figure 6 shows the use of a four-way junction 52 to provide an alternative route to flush used water from the system 1, it will equally be appreciated that, with appropriate settings of the various valves on the outlets from the four-way junction 52, the presence of the four-way junction 52 allows water to be directed around the system 1 in the manner as previously described for any of Figures 2-5.

For example, Figure 6 shows the second embodiment of the invention configured to operate in the same manner as the first embodiment in Figure 4. Fresh water enters the system 1 from the mains water supply 18 and, by closing valves 20a, 20b and opening valve 48, is routed through the second three-way junction 30 and a sixth three-way junction 51 before passing into the supplementary tank 36. The fresh water dilutes and displaces the used water from the supplementary tank 36, which passes through the non-operating pump 4 before being transferred to the first three-way junction 14. Valve 22a is open and valve 22b is closed so the flow of water is directed into the first reservoir tank 6a, and exits from the first reservoir tank 6a through valve 26a before passing through the fifth three-way junction 50 and exiting the system 1 at the drain 34.

Even without the four-way junction 52 shown in Figure 6, *i.e.* using the system shown in Figures 2 to 5, it is possible to configure the various valves such that fresh water from the mains supply 18 can be used to flush used water in the shower unit 2. The fresh water is directed under mains pressure into the one of the reservoirs 6a,6b that already contains clean water, which is in turn connected so as to supply the washing unit 2. Meanwhile water collected in the waste trap 10 can then be drained via the supplementary tank 36 into the other of the reservoirs 6b,6a and the pump 2 can be used to discharge that reservoir 6b,6a to the drain 34.

## Claims

1. A water recirculation system (1) comprising a plurality of reservoirs (6) supplied from a water source (18); a washing unit (2) to receive water from the reservoirs (6); and switching means for selecting from which of the reservoirs (6) the washing unit (2) receives water, wherein the system (1) comprises a pump (4) connected to return water from the washing unit (2) to the reservoirs (6); **characterised in that** a supplementary tank (36) is located between the washing unit (2) and the pump (4), the system (1) having means to distribute water from a first reservoir (6a) of the plurality of reservoirs (6) to the supplementary tank (36).

2. A water recirculation system (1) according to claim 1, further comprising a non-return valve (28) between the water source (18) and the reservoirs (6).

3. A water recirculation system (1) according to claim 1 or claim 2, wherein the washing unit (2) is a shower.

4. A water recirculation system (1) according to any of claim 1 to claim 3, further comprising a non-return valve (46) between the washing unit (2) and the supplementary tank (36).

5. A water recirculation system (1) according to any preceding claim, further comprising means to distribute water from the water source (18) to the supplementary tank (36).

6. A method of re-circulating water in a system (1) according to claim 1,
the method comprising the steps of:
supplying the plurality of reservoirs (6) with water from a water source (18);
heating the water in a first reservoir (6a);
supplying the washing unit (2) with heated water from the first reservoir (6a); and
operating the pump (4) to return the water from the washing unit (2) to the first reservoir (6a);
**characterised in that** the step of operating the pump (4) further comprises:
collecting water from the washing unit (2) in a supplementary tank (36);
supplying water from the supplementary tank (36) to the pump (4); and
operating the pump (4) to circulate the heated water from the first reservoir (6a) to the supplementary tank (36) before the step of supplying the washing unit (2).

7. A method of re-circulating water according to claim 6, wherein the recirculation of water is a continuous process.

## Patentansprüche

1. Wasserrezirkulationssystem (1) mit einer Vielzahl von Reservoirs (6), welche aus einer Wasserquelle (18) gespeist werden, mit einer Wascheinheit (2), um Wasser aus den Reservoirs (6) zu erhalten und mit Schalteinrichtungen, um auszuwählen, von welchem der Reservoirs (6) die Wascheinheit (2) Wasser erhält, wobei das System (1) eine Pumpe (4) aufweist, welche verbunden ist, um Wasser von der Wascheinheit (2) zu den Reservoirs (6) zurückzugeben, **dadurch gekennzeichnet, dass** zwischen der Wascheinheit (2) und der Pumpe (4) ein Zusatztank (36) angeordnet ist, wobei das System (1) Einrichtungen aufweist, um Wasser von einem ersten Reservoir (6a) der Vielzahl von Reservoirs (6) zu dem Zusatztank (36) zu liefern.

2. Wasserrezirkulationssystem (1) nach Anspruch 1, mit einem Rückschlagventil (28) zwischen der Wasserquelle (18) und den Reservoirs (6).

3. Wasserrezirkulationssystem (1) nach Anspruch 1 oder Anspruch 2, wobei die Wascheinheit (2) eine Dusche ist.

4. Wasserrezirkulationssystem (1) nach einem der Ansprüche 1 bis 3, welche zwischen der Wascheinheit (2) und dem Zusatztank (36) ein Rückschlagventil (46) aufweist.

5. Wasserrezirkulationssystem (1) nach einem der vorhergehenden Ansprüche, **gekennzeichnet durch** eine Einrichtung zum Liefern von Wasser von der Wasserquelle (18) zu dem Zusatztank (36).

6. Verfahren zum Rezirkulieren von Wasser in einem System (1) nach Anspruch 1, wobei das Verfahren folgende Schritte aufweist:
Beliefern der Vielzahl von Reservoirs (6) mit Wasser aus einer Wasserquelle (18),
Erhitzen des Wassers in einem ersten Reservoir (6a),
Beliefern der Wascheinheit (2) mit erhitztem Wasser aus dem ersten Reservoir (6a), und
Betreiben der Pumpe (4), um das Wasser von der Wascheinheit (2) zu dem ersten Reservoir (6a) zurückzuführen,
**dadurch gekennzeichnet, dass** der Schritt Betreiben der Pumpe (4) folgende weiteren Schritte aufweist:
Sammeln von Wasser aus der Wascheinheit (2) in einem Zusatztank (36);
Liefern von Wasser von dem Zusatztank (36) an die Pumpe (4) und Betreiben der Pumpe (4), um das erhitzte Wasser von dem ersten Reservoir (6a) zu dem Zusatztank (36) vor dem Schritt des Belieferns der Wascheinheit (2) zu zirkulieren.

7. Verfahren zum Rezirkulieren von Wasser nach Anspruch 1, wobei das Rezirkulieren von Wasser ein kontinuierlicher Prozess ist.

## Revendications

1. Système de recirculation d'eau (1) comportant une pluralité de réservoirs (6) alimentés à partir d'une source d'eau (18), une unité de lavage (2) pour recevoir de l'eau provenant des réservoirs (6), et des moyens de commutation pour sélectionner le réservoir parmi les réservoirs (6) à partir duquel l'unité de lavage (2) reçoit l'eau, dans lequel le système (1) comporte une pompe (4) raccordée de manière à renvoyer l'eau de l'unité de lavage (2) vers les réservoirs (6), **caractérisé en ce qu'**un réservoir supplémentaire (36) est positionné entre l'unité de lavage (2) et la pompe (4), le système (1) ayant des moyens pour distribuer l'eau à partir d'un premier réservoir (6a) de la pluralité des réservoirs (6) au réservoir supplémentaire (36).

2. Système de recirculation d'eau (1) selon la revendication 1, comportant en outre un clapet antiretour (28) entre la source d'eau (18) et les réservoirs (6).

3. Système de recirculation d'eau (1) selon la revendication 1 ou la revendication 2, dans lequel l'unité de lavage (2) est une douche.

4. Système de recirculation d'eau (1) selon l'une quelconque des revendications 1 à 3, comportant en outre un clapet antiretour (46) entre l'unité de lavage (2) et le réservoir supplémentaire (36).

5. Système de recirculation d'eau (1) selon l'une quelconque des revendications précédentes, comportant en outre des moyens pour distribuer l'eau de la source d'eau (18) au réservoir supplémentaire (36).

6. Procédé de recirculation d'eau dans un système (1) selon la revendication 1, le procédé comportant les étapes consistant à :
fournir à la pluralité de réservoirs (6) de l'eau provenant d'une source d'eau (18),
chauffer l'eau dans un premier réservoir (6a),
fournir à l'unité de lavage (2) l'eau chauffée provenant du premier réservoir (6a), et
faire fonctionner la pompe (4) pour renvoyer l'eau de l'unité de lavage (2) au premier réservoir (6a),
**caractérisé en ce que** l'étape de mise en fonctionnement de la pompe (4) comporte en outre les étapes consistant à :
collecter l'eau provenant de l'unité de lavage (2) dans un réservoir supplémentaire (36),
fournir l'eau du réservoir supplémentaire (36) à la pompe (4), et
faire fonctionner la pompe (4) pour mettre en circulation l'eau chauffée du premier réservoir (6a) au réservoir supplémentaire (36) avant l'étape de fourniture à l'unité de lavage (2).

7. Procédé de recirculation d'eau selon la revendication 6, dans lequel la recirculation d'eau est un processus continu.
